# EUROPEAN PATENT APPLICATION

(11) **EP 1 916 787 A1**
(43) Date of publication of application: **30.04.2008**
(21) Application number: 07254202.0
(22) Date of filing: 23.10.2007
(51) Int. Cl.: H04B 10/18, H04B 10/16

(54) **Optical transponders with reduced sensitivity to polarization mode dispersion (PMD) and chromatic dispersion (CD)**

(30) Priority: 24.10.2006 US 585659
(71) Applicant: Kailight Photonics, Inc., Dallas, TX 75204 (US)
(72) Inventor: Granot, Er'el, Herzliya (IL); Ben-Ezra, Shalva, Rehovot (IL); Tzadok, Shai, Petach Tikva (IL); Zaibel, Reuven, Gan Yavne (IL); Dadon, Roni, Ashdod (IL); Caspi, Motti, Rishon LeZion (IL); Sher, Arieh, Rehovot (IL); Sadka, Yaniv, Rishon LeZion (IL); Tsadka, Sagie, D.N. Emek Soreq (IL)
(74) Representative: Jackson, Richard Eric

(57) **Abstract**

Optical transponders with reduced sensitivity to PMD and CD are described. In one embodiment, an optical transponder comprises a differential group delay (DGD) mitigator integrated within the transponder and optically coupled to an optical input port of the optical transponder, an optical receiver integrated within the optical transponder and optically coupled to the DGD mitigator and to an electrical output port of the transponder, and a multi-level transmitter integrated within the optical transponder, where the multi-level transmitter is electrically coupled to an electrical input port and optically coupled to an optical output port of the transponder. In another embodiment, a method comprises receiving and processing an optical input signal using a DGD mitigator integrated within an optical transponder, and receiving an electrical input signal, narrowing the spectrum of the electrical input signal, converting the electrical input signal into an optical output signal, and transmitting the optical output signal.

## Description

### CROSS-REFERENCE TO RELATED APPLICATIONS

The present application is related to concurrently filed and commonly assigned U.S. Patent Application Serial No. 11/585,651, entitled "SYSTEMS AND METHODS FOR POLARIZATION MODE DISPERSION MITIGATION," the disclosure of which is hereby incorporated by reference herein.

### TECHNICAL FIELD

The present invention relates generally to optical systems, and more particularly, to optical transponders.

### BACKGROUND OF THE INVENTION

In modem optical networks, signals are typically transmitted over hundreds, or even thousands of kilometers. Optical signals traveling over long-haul and ultra long-haul optical fibers encounter many different obstacles including, for example, attenuation, chromatic dispersion (CD), and polarization mode dispersion (PMD). While attenuation problems have been successfully solved by the use of amplifiers (e.g., Erbium-Doped Fiber Amplifiers), CD and PMD issues have been much more difficult to handle.

CD is a phenomenon that can lead to loss of data due to broadening of the light pulse on the receiving end of the transmission through an optical fiber. One solution to this problem involves the use of a dispersion compensation fiber (DCF), which has a large negative dispersion coefficient. However, in order to eliminate the CD of a given system, the length of the DCF must be very precise. That is, because the CD of the DCF is very large, any extra fiber length may cause more harm than good. And, apart from the high costs of a DCF, it can be very difficult to design a proper DCF to mitigate the dispersion where the CD of the system is unknown. Moreover, in a varying network, precise CD cancellation is a very complicated undertaking. Thus, the inventors hereof have recognized a need for the use of devices and components that are less sensitive to CD.

In the case of PMD, the problem is even more severe. PMD occurs when different planes (i.e., polarization directions) of light inside a fiber travel at slightly different speeds (for example, due to random imperfections and asymmetries of the optical fiber), thus making it difficult to reliably transmit data at high rates. Typically, the PMD of a given system cannot characterized by a single parameter (e.g., its length), but rather it must be described by a series of parameters that represent the entire history along the communication line. Unfortunately, most networks were built with poor quality fibers in their underground installations at a time when relatively low bit rates were required and PMD was not yet recognized as a potential issue. And, now that these structures must support bit rates of 40Gb/s and higher, PMD presents a significant obstacle to network upgrading.

### BRIEF SUMMARY OF THE INVENTION

The present invention relates to systems and methods for optical transponders which may be used, for example, to facilitate the communication of data across optical networks. It is an objective of the present invention to provide an integrated optical transponder that is capable of reducing chromatic dispersion (CD) effects and correcting polarization mode dispersion (PMD) inherent to long-haul optical fibers. As such, an integrated optical transponder according to aspects of the present invention may be used in Metro and regional networks. It is another objective of the present invention to provide a small and low-cost differential group delay (DGD) mitigation device integrated into a transponder. Certain embodiments of the present invention comprise an optical transponder having a duo-binary transmitter (or another transponder capable of reducing dispersion effects) integrated with a DGD mitigation device. One of the advantages of the integrated optical transponders described herein is that a transmitter may compensate for deficiencies presented by a DGD mitigator and vice-versa. Moreover, the integration described herein also allows components share some of the same electronic infrastructure, thus reducing design and manufacturing costs.

In one exemplary embodiment, an optical transponder comprises a differential group delay (DGD) mitigator integrated within the optical transponder and optically coupled to an optical input port of the optical transponder, an optical receiver integrated within the optical transponder and optically coupled to the DGD mitigator and to an electrical output port of the optical transponder, and a multi-level transmitter integrated within the optical transponder, where the multi-level transmitter is electrically coupled to an electrical input port and optically coupled to an optical output port of the optical transponder.

In another exemplary embodiment, a method comprises receiving and processing an optical input signal using a differential group delay (DGD) mitigator integrated within an optical transponder, converting the processed optical input signal into an electrical output signal using an optical receiver integrated within the optical transponder, and receiving an electrical input signal, narrowing the spectrum of the electrical input signal, converting the electrical input signal into an optical output signal, and transmitting the optical output signal using a transmitter integrated within the optical transponder.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following description taken in conjunction with the accompanying drawings, in which:

FIGURE 1 is a block diagram of an integrated optical transponder, according to one exemplary embodiment of the present invention;
FIGURE 2 is a block diagram of a DGD mitigator, according to another exemplary embodiment of the present invention;

FIGURE 3 is a block diagram of a DGD mitigator in a reflective configuration, according to yet another exemplary embodiment of the present invention;

FIGURE 4 is a block diagram of a receiver, according to one exemplary embodiment of the present invention; and

FIGURE 5 is a block diagram of a transmitter, according to another exemplary embodiment of the present invention.

### DETAILED DESCRIPTION OF THE INVENTION

In the following description, reference is made to the accompanying drawings that form a part hereof, and in which is shown by way of illustration specific embodiments in which the invention may be practiced. These embodiments are described in sufficient detail to enable a person of ordinary skill in the art to practice the invention, and it is to be understood that other embodiments may be utilized and that structural, logical, optical, and electrical changes may be made without departing from the scope of the present invention. The following description is, therefore, not to be taken in a limited sense, and the scope of the present invention is defined by the appended claims.

The inventors hereof have recognized a need for an optical transponder that is less sensitive to chromatic dispersion (CD) while being capable of reducing polarization mode dispersion (PMD) in a varying network. Accordingly, one exemplary embodiment of the present invention integrates two complementary devices: a multi-level transmitter (e.g., a duo-binary transmitter) and a first-order PMD or DGD mitigator. Typically, a duo-binary transmitter is more sensitive to first-order PMD (*i.e.,* differential group delay or DGD). However, because its spectrum is narrower, the duo-binary transmitter is less sensitive to second and higher order PMD. Meanwhile, a PMD mitigator may be designed to reduce mostly first-order PMD or DGD. As a result, integration of a duo-binary transmitter with a DGD mitigator may provide an optical transponder with improved performance and reduced costs.

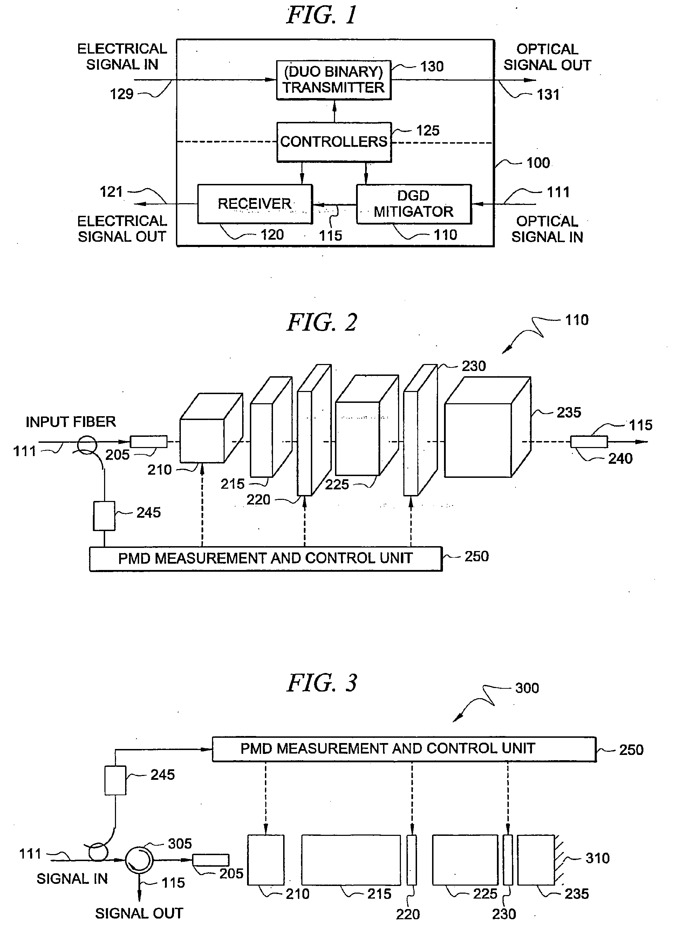

Turning now to FIGURE 1, integrated optical transponder 100 is depicted according to one exemplary embodiment of the present invention. Generally speaking, an "optical transponder" is a device that can both transmit and receive optical signals. In this embodiment, transponder 100 integrates DGD mitigator 110 and transmitter 130 into a single device. The input of DGD mitigator 110 is optically coupled to optical input port 111. The input of receiver 120 is optically coupled to the output of DGD mitigator 110, and the output of receiver 120 is coupled to electrical output port 121. Transmitter 130 is coupled to electrical input port 129 and to optical output port 131. In one embodiment, transmitter 130, receiver 120, and DGD mitigator 115 may share internal controller 125. In another embodiment, transponder 100 may be used as an optical repeater, and electrical output port 121 may be coupled to electrical input port 129.

In operation, an optical input signal enters PMD mitigator 110 within transponder 100 via optical input port 111, which then corrects or reduces any polarization mode dispersion of the optical input signal. DGD mitigator 110 then provides DGD mitigated signal 115 to receiver 120, which transforms DGD mitigated signal 115 into a digital signal and transmits the digital signal via electrical output port 121. Meanwhile, transmitter 130 receives an electrical input signal via input port 129, transforms the electrical signal into an optical signal, and transmits the optical signal via output port 131. In one exemplary embodiment, transmitter 130 may be a duo-binary transmitter, which is less susceptible to chromatic dispersion because its signal has a narrower spectrum. In other embodiments, however, other types of multi-level transmitter may be used (i.e., any other device capable of transmitting with a "symbol rate" that is a fraction of the data rate, but where each symbol conveys the information normally conveyed in multiple bits). Meanwhile, transmitter 130 receives an electrical input signal through electrical input port 129 and outputs an optical signal via optical output port 131. As previously noted, in applications where transponder 100 is used as a repeater, the electrical output signal from receiver 120 may be directly fed into electrical input port 129 of transmitter 130.

FIGURE 2 shows DGD mitigator 110, which may integrated into transponder 100 depicted in FIGURE 1 according to one exemplary embodiment of the present invention. DGD mitigator 110 comprises a plurality of free-space optical elements arranged in a cascaded configuration, and it is capable of operating upon each of two principal modes of polarization of an optical signal. Input optical signal 105 may be split into two portions, where one portion reaches first collimator 205 and another portion reaches optical detector 245. The portion of input optical signal 105 that reaches first collimator 205 passes through polarization controller 210, first birefringent crystal 215, first tunable λ/2 plate 220, second birefringent crystal 225, second tunable λ/2 plate 230, third birefringent crystal 235, and second collimator 240 (all of which are optically coupled to each other) thus producing DGD mitigated signal 115.

Optical detector 245 detects a portion of optical input signal 105 and transmits an electrical signal to PMD measuring and controlling unit 250. PMD measuring and controlling unit 250 measures the first-order PMD (*i.e.,* DGD) of input optical signal 105 and controls first birefringent crystal 215 and first and second tunable λ/2 plates 220 and 230 in order to correct or reduce the DGD of the optical signal. In one exemplary embodiment, PMD measurement and controlling unit 250 may be designed as described in U.S. Patent Application Serial No. 11/585,651, entitled "SYSTEMS AND METHODS FOR POLARIZATION MODE DISPERSION MITIGATION," the disclosure of which is hereby incorporated by reference herein.

Integration of DGD mitigator 110 within optical transponder 100 makes optical transponder 100 capable of correcting polarization mode dispersion over long-haul optical lines. One of the advantages of DGD mitigator 110 over the prior art is that it uses birefringence crystals 215, 225, and 235 rather than optical fibers, thus simplifying its design. Another advantage of DGD mitigator 110 over the prior art is that it provides and discrete, binary tuning set via tunable plates 220 and 230, as opposed to continuous tuning which is more complex and subject to errors. As will be readily recognized by a person of ordinary skill in the art, DGD mitigator 110 may be integrated within optical transponder 100 of FIGURE 1, thus resulting in a high performance, low cost, and compact device. Moreover, when used within an integrated optical transponder 100, DGD mitigator 110 may reduce first order PMD while a multi-level transmitter may mitigate higher order PMD (because of its narrower spectrum).

Still referring to FIGURE 2, DGD mitigator 110 is a tunable device. In addition, DGD mitigator 110 advantageously operates between the two principal states of polarizations of the line, thus providing a relative, tunable optical delay line. Polarization controller 210 is provided in front crystals 215, 225, and 235, so that the principal states of polarization are oriented along the axes of crystals 215, 225, and 235. Crystals 215, 225, and 235 then fix the DGD between the two principal states of polarization of the line.

Turning now to FIGURE 3, another DGD mitigator in a reflective configuration 300 may substitute DGD mitigator 110 within integrated transponder 100 depicted in FIGURE 1, according to one exemplary embodiment of the present invention. This particular embodiment is advantageous because it allows DGD mitigator 300 to be completely integrated into transponder 100 without enlarging its case, thus resulting in a small and compact device. Particularly, this embodiment allows crystals 215, 225, and 235 to have half the size of their counterparts in FIGURE 2. In this case, input optical signal enters DGD mitigator 300 via fiber circulator 305, which may be positioned anywhere inside the transponder's 100 case. Mirror 310 may take the form of a highly reflecting coating on crystal 235. For example, in the case of Yttrium Vanadate (YVO₄) crystals, where DGD mitigator 300 is designed to mitigate 30 ± 5 ps, the lengths of crystals 215, 225, and 235 may be 11.25 mm, 7.5 mm, and 3.75 mm, respectively, which means that the entire DGD mitigator 300 may be made smaller than 40 mm.

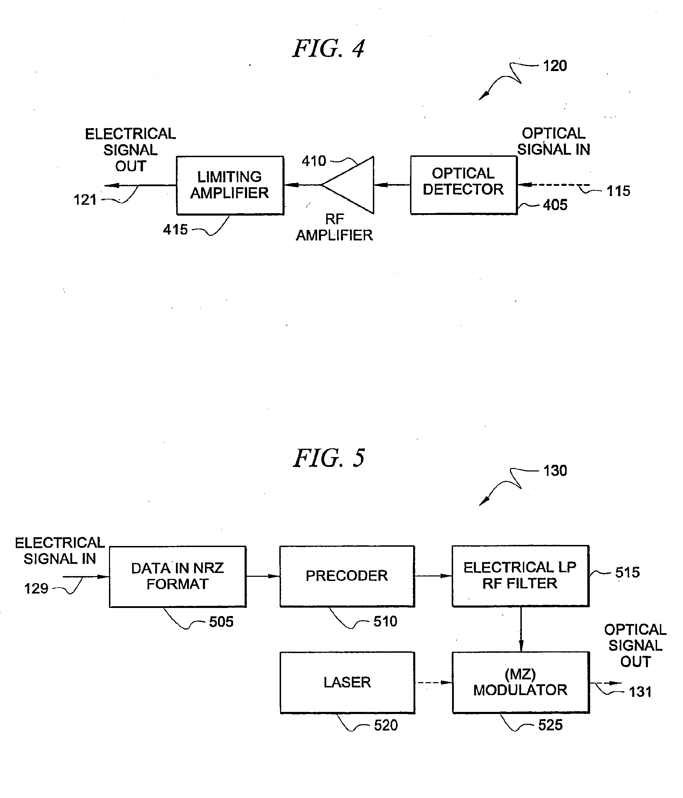

With respect to FIGURE 4, receiver 120 may be integrated into transponder 100 depicted in FIGURE 1 according to one exemplary embodiment of the present invention. DGD mitigated signal 115 may leave DGD mitigator 110 (or 300) and reach optical detector 405 of receiver 120. Optical detector 405 converts DGD mitigated signal 115 into an electrical signal, which is then amplified by radio frequency (RF) amplifier 410 and processed by limiting amplifier 415. Finally, receiver 120 produces an electrical output signal via output port 121.

FIGURE 5 shows transmitter 130, which may be integrated into transponder 100 depicted in FIGURE 1 according to one exemplary embodiment of the present invention. Although transmitter 130 is illustrated here as being a duo-binary transmitter, other types of multi-level transmitters may alternatively be used. In this embodiment, an input digital signal is received via input port 129 and processed by non-return to zero (NRZ) formatter 505, precoder 510, and electrical low-pass RF filter 515, respectively. The output of low-pass filter 515 is fed into Mach-Zehnder (MZ) modulator 525, which modulates the output of laser 520, thus outputting an optical signal via optical output port 131.

When transmitter 130 is a duo-binary transmitter, rather than transmitting the original digital signal (e.g., 1 0 0 1 1 1 0), it provides the sum of two adjacent bits (*e.g*., 1 0 1 2 2 1). Along with the filter, the Full-Width Half-Maximum (FWHM) spectrum of the duo-binary transmitted signal is narrower than the original NRZ signal. Further, high-frequencies reduced by the use of low-pass filter 515, which is possible in part because the spectrum of the duo-binary signal is narrow, and therefore less susceptible to such filtering. Furthermore, MZ modulator 525 and precoder 510 may be arranged in such a way that the intensity (rather than the field) of the transmitted signal is identical to that of the input digital via port 129, thus allowing simpler operation based on the NRZ format. As a consequence of its narrower spectrum, duo-binary transmitter 130 is considerably less susceptible to chromatic dispersion than other transmitters and is more robust against CD problems. Furthermore, because of its relative simplicity and immunity to CD effects, duo-binary transmitter 130 may be especially useful in varying networks, where perfect CD cancellation is very complicated. Again, while duo-binary transmitter 130 is susceptible to DGD, it is less sensitive to higher-order PMD, therefore a DGD mitigation device such as the ones depicted in FIGURES 2 or 3 can dramatically improve performance of an optical transponder such as transponder 100 of FIGURE 1.

Although some exemplary embodiments of present invention and their advantages have been described above in detail, it should be understood that various changes, substitutions and alterations can be made herein without departing from the spirit and scope of the invention as defined by the appended claims. Moreover, the scope of the present invention is not intended to be limited to the particular embodiments of the process, machine, manufacture, means, methods and steps depicted herein. As a person of ordinary skill in the art will readily appreciate from this disclosure other, processes, machines, manufacture, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, means, methods, or steps.

## Claims

1. An optical transponder comprising:
a differential group delay (DGD) mitigator integrated within the optical transponder and optically coupled to an optical input port of the optical transponder;
an optical receiver integrated within the optical transponder and optically coupled to the DGD mitigator and to an electrical output port of the optical transponder; and
a multi-level transmitter integrated within the optical transponder, where the multi-level transmitter is electrically coupled to an electrical input port and optically coupled to an optical output port of the optical transponder.

2. The optical transponder of claim 1, where the DGD mitigator is operable to perform a binary tuning of an optical signal.

3. The optical transponder of claim 1, where the DGD mitigator comprises a plurality of free-space optical elements arranged in a cascaded configuration.

4. The optical transponder of claim 3, where at least one of the plurality of free-space optical elements is a birefringent crystal.

5. The optical transponder of claim 3, where the plurality of free-space optical elements is further arranged in a reflective configuration.

6. The optical transponder of claim 1, where the DGD mitigator operates on each of two principal polarization modes of an optical signal.

7. The optical transponder of claim 1, where the multi-level transmitter comprises a duo-binary transmitter.

8. The optical transponder of claim 1, where the multi-level transmitter is insensitive to a chromatic dispersion (CD) effect of a varying optical line.

9. The optical transponder of claim 1, where the electrical output port is coupled to the electrical input port, thereby forming a repeater.

10. An optical transponder comprising:
means integrated within the optical transponder for receiving an optical input signal, reducing a differential group delay (DGD) effect, and providing a reduced DGD signal;
means integrated within the optical transponder for converting the reduced DGD signal into an electrical output signal; and
means integrated within the optical transponder for receiving an electrical input signal, narrowing the spectrum of the electrical input signal, converting the electrical input signal into an optical output signal, and transmitting the optical output signal.

11. The optical transponder of claim 10, where the means for reducing the DGD effect of the optical signal comprises a DGD mitigator.

12. The optical transponder of claim 10, where means for narrowing the spectrum of the electrical input signal comprises a multi-level optical transmitter.

13. The optical transponder of claim 12, where the multi-level optical transmitter comprises a duo-binary transmitter.

14. A method comprising:
receiving and processing an optical input signal using a differential group delay (DGD) mitigator integrated within an optical transponder;
converting the processed optical input signal into an electrical output signal using an optical receiver integrated within the optical transponder; and
receiving an electrical input signal, narrowing the spectrum of the electrical input signal, converting the electrical input signal into an optical output signal, and transmitting the optical output signal using a transmitter integrated within the optical transponder.

15. The method of claim 14, further comprising reducing a DGD effect of an optical line.

16. The method of claim 14, further comprising converting the electrical input signal into a non-return to zero (NRZ) signal.

17. The method of claim 14, further comprising precoding the electrical input signal.

18. The method of claim 14, further comprising low-pass filtering the electrical input signal.

19. The method of claim 18, further comprising using the low-pass filtered electrical input signal to modulate the output of a laser into a modulated optical signal.

20. The method of claim 19, further comprising transmitting the modulated optical signal.
